# EUROPÄISCHE PATENTSCHRIFT

(11) **EP 0 652 250 B1**
(45) Veröffentlichungstag und Bekanntmachung des Hinweises auf die Patenterteilung: **28.01.1998**
(21) Anmeldenummer: 94116725.6
(22) Anmeldetag: 24.10.1994
(51) Int. Cl.: C08J 9/08, C08G 18/32, C08G 18/66

(54) **Verfahren zur FCKW-freien Herstellung von zelligen Polyurethanformkörpern**
Process for the CFC-free preparation of cellular moulded bodies of polyurethane
Procédé de préparation de corps moulés cellulaires de polyuréthane sans utilisation de CFC

(30) Priorität: 04.11.1993 DE 4337569
(43) Veröffentlichungstag der Anmeldung: 10.05.1995
(73) Patentinhaber: BAYER AG, 51368 Leverkusen (DE)
(72) Erfinder: Weber, Hans G., D-37115 Duderstadt (DE); Haas, Peter, Dr., D-42781 Haan (DE); Michels, Erhard, Dr., D-51065 Köln (DE); Weber, Christian, Dr., D-51375 Leverkusen (DE); Brecht, Klaus, Ing.-grad., D-51515 Kürten (DE)

(56) Entgegenhaltungen:
- EP-A- 0 121 850
- EP-A- 0 236 895
- EP-A- 0 415 599
- DE-A- 2 621 582

## Beschreibung

Die Erfindung betrifft ein Verfahren zur Herstellung von zelligen Polyurethanformkörpern mit kompakter Oberfläche, bei welchem auf die Mitverwendung von FCKW-Treibmitteln und auch von HFCKW-Treibmitteln verzichtet wird, und welches dennoch zu Formkörpern führt, die bei gleicher Härte eine gleiche Schwindung wie die bislang mit den genannten Treibmitteln hergestellten Formkörper aufweisen.

Zur Herstellung von Polyurethanschaumstoffen wurden bislang neben Wasser insbesondere Fluorchlorkohlenwasserstoffe (FCKW) oder Hydrogenfluorchlorkohlenwasserstoffe (HFCKW) als Treibmittel verwendet. Insbesondere zur Herstellung von halbharten Formteilen aus Polyurethanschaumstoff mit kompakter Oberfläche wie sie z.B. zur Ummantelung von Lenkrädern oder als Schuhsohlen Verwendung finden, wurden bislang praktisch ausschließlich die zuletzt genannten halogenhaltigen Treibmittel verwendet. Die mit diesen Treibmitteln hergestellten halbharten Schaumstoffe weisen eine Schwindung von ca. 1,5 % auf, die beim Formenbau berücksichtigt werden mußte. Die in der Praxis verwendeten Formen sind wegen dieses nahezu konstanten Schrumpfwertes von 1,5 % entsprechend größer ausgelegt worden, um nach Ablauf des vorausberechenbaren Schrumpfes die eigentlich angestrebte Dimension des Formkörpers zu erreichen.

Wegen der bekannten ökologischen Problematik im Zusammenhang mit den genannten halogenhaltigen Treibmitteln besteht ein großes Interesse an neuartigen, zu halbharten Polyurethanschaumstoffen mit kompakter Oberfläche ausreagierbaren Reaktivsystemen, in denen keine halogenhaltigen Treibmittel vorliegen, sondern vielmehr solche, die die Vorteile dieser Treibmittel aufweisen, ohne mit deren Nachteilen, insbesondere in ökologischer Hinsicht, behaftet zu sein. Die Treibmittel sollten nicht nur die Herstellung von Formschaumstoffen mit kompakter Oberfläche gestatten, sondern darüber hinaus zu Formteilen führen, deren Schwindung bei gleicher Härte der Schwindung der mit den genannten halogenhaltigen Treibmittel hergestellten Polyurethanschaumstoffen entspricht. Nur unter dieser Voraussetzung können nämlich die bislang eingesetzten Formen weiterhin verwendet werden.

Die Verwendung von Wasser als ausschließlichem Treibmittel stellt keine Lösung des genannten Problems dar, insbesondere weil (i) der Druckabbau im Schaumstoff viel langsamer abläuft als bei Verwendung der bekannten halogenhaltigen Treibmittel, so daß bei der bei der Serienproduktion üblichen kurzen Formstandzeit Formkörper resultieren, die leicht zum Platzen neigen, (ii) die Elastizität der resultierenden Formkörper (insbesondere bei Schuhsohlen) den Anforderungen der Praxis nicht genügt und insbesondere da (iii) die resultierenden Formkörper eine Schwindung von lediglich 0,5 % aufweisen, so daß die bislang verwendeten Formwerkzeuge unbrauchbar würden.

Der ebenfalls naheliegende Gedanke der Verwendung von Kohlenwasserstoffen wie z.B. den isomeren Pentanen bzw. von Cyclopentan ist vor allem mit dem Problem der leichten Entflammbarkeit dieser Substanzen verbunden.

Überraschenderweise wurde jetzt gefunden, daß bestimmte Carbamate der nachstehend näher beschriebenen Art Treibmittel darstellen, die allen oben genannten Voraussetzungen entsprechen, d.h., die insbesondere die Herstellung von halbharten Polyurethanschaumstoffen kompakter Oberfläche ermöglichen, deren Schwindung bei vergleichbarer Härte der Schwindung der bislang mit den genannten halogenhaltigen Treibmittel hergestellten Schaumstoffe entspricht.

Die EP-B-0 121 850 beschreibt zwar u.a. bereits die Verwendung von Carbamaten der jetzt empfohlenen Art als Treibmittel für Polyurethanschaumstoffe, wobei diese, wie den Ausführungsbeispielen zu entnehmen, vorzugsweise in Kombination mit anderen Treibmitteln zum Einsatz gelangen. Die Vorveröffentlichung vermittelt jedoch keinerlei Hinweis auf den überraschenden Befund, daß die Carbamate auch die Herstellung von Polyurethanschaumstoffen mit kompakter Oberfläche gestatten, ganz zu schweigen, von der jetzt gemachten Beobachtung, daß die so hergestellten Formschaumstoffe bezüglich ihrer Schwindung den oben diskutierten Formschaumstoffen gemäß Stand der Technik entsprechen.

Gegenstand der Erfindung ist ein Verfahren zur FCKW-freien Herstellung von zelligen Polyurethanformkörpern mit kompakter Oberfläche durch Umsetzung in geschlossenen Formen eines Reaktionsgemischs aus
A) einer Polyisocyanatkomponente mit einem NCO-Gehalt von 18 bis 33,6 Gew.-%, bestehend aus mindestens einem, gegebenenfalls chemisch modifizierten Polyisocyanat oder Polyisocyanatgemisch der Diphenylmethanreihe,
B) einer Polyolkomponente einer mittleren Hydroxylfunktionalität von 2 bis 3, bestehend aus mindestens einem Polyetherpolyol des Molekulargewichtsbereichs 2 000-10 000 und/oder mindestens einem Polyesterpolyol des Molekulargewichtsbereichs 2 000-10 000,
C) mindestens einer im Sinne der Isocyanat-Polyadditionsreaktion difunktionellen Verbindung des Molekulargewichtsbereichs 62 bis 1999 in einer Menge von 2 bis 15 Gew.-%, bezogen auf das Gewicht der Komponente B),
in Gegenwart von
D) Treibmitteln und weiteren aus der Polyurethanchemie an sich bekannten Hilfs- und Zusatzmitteln,
dadurch gekennzeichnet, daß man als Treibmittel D) Carbamate der allgemeinen Formel 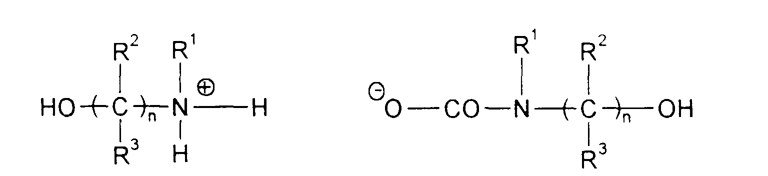 gegebenenfalls zusammen mit anderen halogenfreien Treibmitteln verwendet, wobei
- R¹: für Wasserstoff, einen C₁-C₅-Alkylrest oder einen Rest der Formel 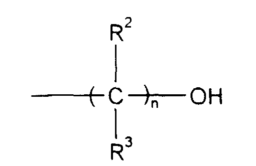 steht
- R² und R³: für gleiche oder verschiedene Reste stehen und Wasserstoff oder C₁-C₃-Alkylreste bedeuten und
- n: für eine ganze Zahl von 2 bis 6 steht.

Die Polyisocyanatkomponente A) ist vorzugsweise bei 20°C flüssig und weist einen NCO-Gehalt von 18 bis 33,6, vorzugsweise von 20 bis 30 Gew.-%, auf. Es handelt sich um mindestens ein, gegebenenfalls chemisch modifiziertes, Polyisocyanat oder Polyisocyanatgemisch der Diphenylmethanreihe. Hierunter sind insbesondere 4,4'-Diisocyanatodiphenylmethan, dessen technische Gemische mit 2,4'-Diisocyanatodiphenylmethan und gegebenenfalls 2,2'-Diisocyanatodiphenylmethan, Gemische dieser Diisocyanate mit ihren höheren Homologen, wie sie bei der Phosgenierung von Anilin/Formaldehyd-Kondensaten anfallen und/oder bei der destillativen Aufarbeitung von derartigen Phosgenierungsprodukten erhalten werden, zu verstehen. Bei der "chemischen Modifizierung" dieser Polyisocyante handelt es sich insbesondere um die an sich bekannte Urethan-Modifizierung, z.B. durch Umsetzung von bis zu 30 Äquivalentprozent der vorliegenden NCO-Gruppen mit Polypropylenglykolen eines maximalen Molekulargewichts von 700 oder um eine an sich bekannten Carbodiimidisierung von bis zu 30 % der vorliegenden NCO-Gruppen.

Die Komponente B) weist eine mittlere Hydroxylfunktionalität von 2 bis 3 auf und besteht aus mindestens einem Polyhydroxypolyether des Molekulargewichtsbereichs 2 000 bis 10 000, vorzugsweise 3 000 bis 6 000 und/oder mindestens einem Polyhydroxypolyester des Molekulargewichts 2 000 bis 10 000, vorzugsweise 2 000 bis 4 000. Diese Angaben bezüglich des Molekulargewichts beziehen sich auf das aus OH-Funktionalität und OH-Gehalt errechenbare Molekulargewicht.

Geeignete Polyhydroxypolyether sind die aus der Polyurethanchemie an sich bekannten Alkoxylierungsprodukte von vorzugsweise di- oder trifunktionellen Startermolekülen bzw. Gemischen derartiger Startermoleküle. Geeignete Startermoleküle sind beispielsweise Wasser, Ethylenglykol, Diethylenglykol, Propylenglykol, Trimethylolpropan oder Glycerin. Zur Alkoxylierung eingesetzte Alkylenoxide sind insbesondere Propylenoxid und Ethylenoxid, wobei diese Alkylenoxide in beliebiger Reihenfolge und/oder als Gemisch zum Einsatz gelangen können.

Geeignete Polyesterpolyole sind die an sich bekannten, Hydroxylgruppen aufweisenden Veresterungsprodukte von vorzugsweise zweiwertigen Alkoholen wie beispielsweise Ethylenglykol, Propylenglykol, Neopentylglykol, 1,4-Butandiol, 1,6-Hexandiol mit unterschüssigen Mengen an vorzugsweise difunktionellen Carbonsäuren wie beispielsweise Bernsteinsäure, Adipinsäure, Phthalsäure, Tetrahydrophthalsäure, Hexahydrophthalsäure oder Gemischen derartiger Säuren.

Bei der Komponente C) handelt es sich um difunktionelle Kettenverlängerungsmittel des Molekulargewichtsbereichs 62 bis 1999, vorzugsweise 62 bis 400. Falls es sich um keine definierten Verbindungen handelt, bezieht sich diese Angabe bezüglich des Molekulargewichts ebenfalls auf den aus OH-Funktionalität und OH-Gehalt errechneten Wert.

Zu den bevorzugten Kettenverlängerungsmitteln C) gehören einfache zweiwertige Alkohole eines unter 200 liegenden Molekulargewichts wie beispielsweise Ethylenglykol, 1,4-Butandiol, 1,6-Hexandiol oder Gemische derartiger einfacher Diole. Als Komponente C) bzw. als Teil der Komponente C) ebenfalls geeignet sind den gemachten Angaben bezüglich des Molekulargewichts entsprechende, Ethergruppen aufweisende Diole, wie sie durch Propoxylierung und/oder Ethoxylierung von zweiwertigen Startermolekülen der bereits oben beispielhaft genannten Art zugänglich sind.

Als Kettenverlängerungsmittel C) ebenfalls geeignet sind aromatische Diamine mit sterisch gehinderten Aminogruppen wie insbesondere 1-Methyl-3,5-diethyl-2,4-diaminobenzol und dessen technischen Gemischen mit 1-Methyl-3,5-diethyl-2,6-diaminobenzol (DETDA). Beliebige Gemische der beispielhaft genannten Kettenverlängerungsmitteln können ebenfalls eingesetzt werden. Die Kettenverlängerungsmittel C) werden beim erfindungsgemäßen Verfahren in Mengen von 2 bis 15, vorzugsweise 4 bis 12 Gew.-%, bezogen auf das Gewicht der Komponente B), eingesetzt.

Als Hilfs- und Zusatzmittel D) werden einerseits die erfindungswesentlichen Carbamate und andererseits Zusatzmittel der an sich bekannten Art verwendet.

Bei den erfindungswesentlichen Carbamaten handelt es sich um Verbindungen der bereits obengenannten allgemeinen Formel, wobei die Variablen R¹ bis R³ und n die bereits oben genannte Bedeutung haben.

Vorzugsweise werden solche Carbamate der genannten allgemeinen Formel eingesetzt, für welche
- R¹: für Wasserstoff, eine Methylgruppe oder den Rest der Formel, 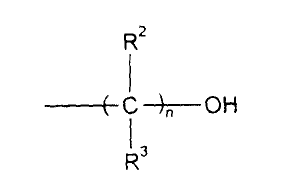 besonders bevorzugt für Wasserstoff steht,
- R²: für Wasserstoff steht,
- R³: für Wasserstoff oder eine Methylgruppe steht und
- n: für 2 steht oder im Falle von R² = R³ = H auch für 3 stehen kann.

Die Herstellung der Carbamate erfolgt durch einfache Sättigung der zugrundeliegenden Alkanolamine der Formel 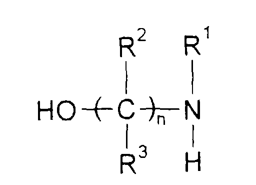 mit gasförmigem oder festem Kohlendioxid bei Temperaturen zwischen 40 und 130°C.

Besonders bevorzugte Alkanolamine zur Herstellung der Carbamate sind Ethanolamin, Isopropanolamin, 3-Aminopropanol-1, N-Methylethanolamin oder Gemische derartiger Alkanolamine.

Bei der Durchführung des erfindungsgemäßen Verfahrens wird das als Treibmittel verwendete Carbamat in einer Menge von 0,1 bis 6, vorzugsweise 0,5 bis 5 Gew.-%, bezogen auf das Gewicht der Komponente B), verwendet.

Weitere, gegebenenfalls mitzuverwendende Hilfs- und Zusatzmittel D) sind die bei der Herstellung von Polyurethanschaumstoffen üblichen wie z.B. Aktivatoren, Stabilisatoren oder auch sonstige halogenfreie Treibmittel wie insbesondere Wasser, welches gegebenenfalls in einer Menge von bis zu 0,3 Gew.-%, bezogen auf das Gewicht der Komponente B), mitverwendet wird. Vorzugsweise wird das erfindungsgemäße Verfahren jedoch ohne zugesetztes Wasser durchgeführt.

Die Ausgangskomponenten werden im übrigen in solchen Mengen eingesetzt, die einer Isocyanat-Kennzahl von 80 bis 120, vorzugsweise 95 bis 105, entsprechen.

Zur Durchführung des erfindungsgemäßen Verfahrens werden im allgemeinen die Komponenten B) bis D) zu einer "Polyolkomponente" vereinigt, die dann mit der Polyisocyanatkomponente A) vermischt und in geschlossenen Formen zur Reaktion gebracht wird. Hierbei bedient man sich üblicher Meß- und Dosiervorrichtungen. Als Formwerkzeuge werden beispielsweise Schuhsohlen- bzw. Schuhbauteilformen (zur Herstellung von Schuhsohlen oder Schuhbauteilen nach dem Gieß- oder Direktbesohlungsverfahren), Lenkrad- bzw. Spoilerformen oder Formen für Schutzpolster im Autoinnenraum verwendet, deren Innenwände vor Befüllen der Form oftmals mit üblichen Formtrennmitteln beschichtet werden.

Die Temperatur der Reaktionskomponenten (Polyisocyanatkomponente A) bzw. Polyolkomponente) liegt im allgemeinen innerhalb des Temperaturbereichs von 20 bis 45°C. Die Temperatur der Formwerkzeuge liegt im allgemeinen bei 20 bis 70°C.

Die Menge des in die Form eingetragenen schäumfähigen Materials wird so bemessen, daß Rohdichten der Formteile von 200 bis 700 kg/m³ resultieren.

Bei den erfindungsgemäßen Verfahrensprodukten handelt es sich um halbharte Polyurethanschaumstoffe mit kompakter Oberfläche des Härtebereichs Shore A 20 bis 70. Die Schwindung dieser Formteile liegt bei 1,2 bis 1,8 % und entspricht der Schwindung der bislang unter Verwendung von FCKW- bzw. HFCKW-Treibmitteln hergestellten analogen Formkörper.

In den nachstehenden Beispielen beziehen sich alle Prozentangaben, mit Ausnahme der Angaben bezüglich der Schwindung, auf das Gewicht.

### Beispiele

### Ausgangsmaterialien

### Polyisocyanat I:

Ein mit Tripropylenglykol verflüssigtes 4,4'-Diphenylmethandiisocyanat mit einem NCO-Gehalt von 23 %.

### Polyisocyanat II:

NCO-Prepolymer mit einem NCO-Gehalt von 20,2 %, hergestellt durch Umsetzung von (i) 56 Gew.-Tln 4,4'-Diisocyanatodiphenylmethan (4,4'-MDI) und 1 Gew.-Tl. eines modifizierten 4,4'-MDI sind mit einem NCO-Gehalt von 30 %, hergestellt durch partielle Carbodiimidisierung der NCO-Gruppen, mit (ii) einem Gemisch aus 21 Gew.-Tln Polypropylenglykol der OH-Zahl 56 und 6,7 Gew.-Tln Tripropylenglykol.

### Polyisocyanat III:

Polyisocyanatgemisch mit einem NCO-Gehalt von 28 % und einer Viskosität (25°C) von 130 mPa.s, bestehend aus gleichen Gewichtsteilen (i) eines Polyisocyanats mit einem NCO-Gehalt von 24,5 % und einer Viskosität (25°C) von 500 mPa.s, das durch Phosgenierung eines Anilin/Formaldehyd-Kondensats und anschließende Umsetzung des Phosgenierungsprodukts mit Polypropylenglykol der OH-Zahl 515 erhalten wurde, und (ii) einem Polyisocyanatgemisch der Diphenylmethanreihe mit einem NCO-Gehalt von 31,5 % und einem Gehalt an Diisocyanatodiphenylmethan-Isomeren von 60 % (94 % 4,4'-, 5 % 2,4'- und 1 % 2,2'-Isomer) und höherkernigen Homologen von 40 %.

### Polyol I:

Polyetherdiol des Molekulargewichts 4 000, hergestellt durch Propoxylierung von Propylenglykol und anschließende Ethoxylierung des Propoxylierungsprodukts (PO:EO-Gewichtsverhältnis = 70:30).

### Polyol II:

Polyethertriol des Molekulargewichts 6 200, hergestellt durch Propoxylierung von Trimethylolpropan und anschließende Ethoxylierung des Propoxylierungsprodukts (PO:EO-Gewichtsverhältnis = 80:20).

### Polyol III:

Polyethertriol des Molekulargewichts 4 800, hergestellt durch Propoxylierung von Trimethylolpropan und anschließende Ethoxylierung des Propoxylierungsprodukts (PO:EO-Gewichtsverhältnis = 85:15).

### Polyol IV:

Mit 20 Gew.-%, bezogen auf Gesamtgewicht, Styrol/Acrylnitril (Gewichtsverhältnis = 40:60) gepfropftes Polyethertriol, welches durch Propoxylierung von Trimethylolpropan und anschließende Ethoxylierung des Propoxylierungsprodukts (PO:EO-Gewichtsverhältnis = 85:15) hergestellt worden war, das Molekulargewicht des Pfropfpolyethers liegt bei 6 000.

### Carbamat I:

In 750 g (10 m) 3-Aminopropanol-1 wird bis zur Sättigung CO₂ eingeleitet, wobei ca. 5 m aufgenommen worden sind.

| | | | |
|---|---|---|---|
| Analyse für C₇H₁₈N₂O₄ (194) ber. | C: 43.2 %, | H: 9.2 %, | N: 14,4 %; |
| gef. | C: 43,1 %, | H: 9,1 %, | N: 14,8 %; |

Viskosität: 45 000 mPa.s (25°C).

### Carbamat II:

In 610 g (10 m) Aminoethanol wird bis zur Sättigung CO₂ eingeleitet, wobei ca 5 m aufgenommen worden sind.

| | | | |
|---|---|---|---|
| Analyse für C₅H₁₄N₂O₄ (166) ber. | C: 36,1 %, | H: 9,4 %, | N: 16,8 %; |
| gef. | C: 35,9 %, | H: 8,6 %, | N: 17,0 %; |

Viskosität: 22 000 mPa.s (25°C).

### Carbamat III:

In 750 g (10 m) N-Methylethanolamin wird bis zur Sättigung CO₂ eingeleitet, wobei ca. 5 m aufgenommen worden sind.

| | | | |
|---|---|---|---|
| Analyse für C₇H₁₈N₂O₄ (194) ber. | C: 43,2 %, | H: 9,2 %, | N: 14,4 %; |
| gef. | C: 43,0 %, | H: 8,8 %, | N: 14,7 %; |

Das Carbamat erstarrt kristallin. Fp.: 50°C.

### Carbamat IV:

In 750 g (10 m) Isopropanolamin wird bis zur Sättigung CO₂ eingeleitet, wobei fast 5 m aufgenommen werden.

| | | | |
|---|---|---|---|
| Analyse für C₇H₁₈N₂O₄ (194) ber. | C: 43,2 %, | H: 9,2 %, | N: 14,4 %; |
| gef. | C: 42,9 %, | H: 8,8 %, | N: 14,9 %; |

Viskosität: 150 000 mPa.s (25°C).

In allen nachfolgenden Beispielen wurden unter Einhaltung einer NCO-Kennzahl von 100 gearbeitet.

### Beispiel 1

Über eine für die Herstellung von Schuhsohlen üblichen Niederdruckdosieranlage mit Rührwerk der Fa. Elastogran Maschinenbau wird in eine Schuhsohlenform der Normschuhgröße 8 1/2 ein schäumfähiges Gemisch der nachstehenden Zusammensetzung in einer solchen Menge eingetragen, daß eine Rohdichte von 550 kg/m³ resultiert. Werkzeugtemperatur: 45°C, Rohstofftemperatur: 25°C, Formstandzeit: 4 min.

Die Innenwände der Form wurden mit einem handelsüblichen Formtrennmittel besprüht (Keck-Öko-65 A, der Fa. J. Keck, Pirmasens).

| Polyolkomponente: | |
|---|---|
| Polyol I | 78,6 Gew.-Teile |
| Polyol II | 10,0 Gew.-Teile |
| Butandiol-1,4 | 10,0 Gew.-Teile |
| Triethylendiamin | 0,3 Gew.-Teile |
| Dibutylzinndilaurat (DBTL) | 0,02 Gew.-Teile |
| Carbamat IV | 1,0 Gew.-Teile |

| Polyisocyanatkomponente: | |
|---|---|
| Polyisocyanat I | 56,0 Gew.-Teile |

| Eigenschaften: | |
|---|---|
| Rohdichte: | 550 kg/m⁻³ |
| Längenschwindung (%) nach 2 Tagen | 1,5 |
| Härte (Shore A) | 58 |
| Fließverhalten | sehr gut |

### Beispiel 2 (Vergleich):

In nachstehendem Vergleichsbeispiel wird ein analoger Schaumstoff entsprechend Beispiel 1 unter Verwendung von Difluorchlormethan (R22) Treibmittel hergestellt. Die Variation der Mengenverhältnisse der Ausgangsmaterialien entsprach dem angestrebten Vergleich bezüglich der Schwindung bei gleicher Härte.

| Polyolkomponente: | |
|---|---|
| Polyol I | 78,6 Gew.-Teile |
| Polyol II | 10,0 Gew.-Teile |
| Butandiol-1,4 | 8,5 Gew.-Teile |
| Triethylendiamin | 0,45 Gew.-Teile |
| Dibutylzinndilaurat (DBTL) | 0,02 Gew.-Teile |
| R22 | 2,5 Gew.-Teile |

| Polyisocyanatkomponente: | |
|---|---|
| Polyisocyanat I | 44 Gew.-Teile |

| Eigenschaften: | |
|---|---|
| Rohdichte: | 550 kg/m⁻³ |
| Längenschwindung (%) nach 2 Tagen | 1,5 |
| Härte (Shore A) | 58 |
| Fließverhalten | gut |

Eine gleiche Schwindung wird mit 5,5 Gew.-Teilen R 11 (Monofluortrichlormethan) bei gleicher Rohdichte erreicht.

Eine Wiederholung von Beispiel 1 unter Verwendung gleicher Gewichtsteile der Carbamate I bis III anstelle des Carbamats IV führt bezüglich der Schwindung und mechanischen Eigenschaften zu praktisch identischen Ergebnissen. Mit nachstehendem Vergleichsbeispiel wird die Herstellung eines weitgehend analogen Formschaumstoffs gleicher Härte unter ausschließlicher Verwendung von Wasser als Treibmittel beschrieben. Da die Verwendung von Wasser als Treibmittel wegen der höheren Konzentration an Harnstoffgruppen im allgemeinen zu einer Versprödung des Schaumstoffs führt, wird gleichzeitig die Polyisocyanatkomponente I durch die elastifizierend wirkende Polyisocyanatkomponente II ersetzt, um diesen negativen Effekt zu kompensieren.

| Polyolkomponente: | |
|---|---|
| Polyol I | 79,33 Gew.-Teile |
| Polyol II | 10,00 Gew.-Teile |
| Butandiol-1,4 | 10,00 Gew.-Teile |
| Triethylendiamin | 0,3 Gew.-Teile |
| Dibutylzinndilaurat (DBTL) | 0,03 Gew-Teile |
| Wasser | 0,35 Gew.-Teile |

| Polyisocyanatkomponente: | |
|---|---|
| Polyisocyanat II | 64 Gew.-Teile |

| Eigenschaften: | |
|---|---|
| Rohdichte: | 550 kg/m⁻³ |
| Längenschwindung (%) nach 2 Tagen | 0,5 |
| Härte (Shore A) | 58 |
| Fließverhalten | gut |

Bei durch Wasser getriebenen Schuhsohlen ist das Schwindungsverhalten massiv geändert, so daß im Falle einer industriellen Nutzung der gesamte Formenbestand erneuert werden müßte.

### Beispiel 3

Das überraschend problemlose Fließen in einer komplizierten Lendradform und der zügige Druckabbau im Formteil, charakterisiert durch die leichte Schwindung bereits unmittelbar nach der Entformung wird in Beispiel 3 (erfindungsgemäß) gezeigt. Das nachfolgende Beispiel 4 (Vergleich) zeigt das starke Nachblähen des Formteils bei Wasservernetzung.

Bei der Durchführung beider Beispiele wurden die schäumfähigen Gemische unter Verwendung üblicher Hochdruck-Mischaggregate verarbeitet. Die Menge des schäumfähigen Gemischs wurde so bemessen, daß jeweils Rohdichten von 450 kg/m³ resultierten. Die Werkzeugtemperatur betrug jeweils 45°C, die Rohstofftemperatur jeweils 25°C. Die Innenwände des Werkzeugs wurden jeweils mit einem handelsüblichen Formtrennmittel (®Acmosil 36-3603, Acmos D 28199 Bremen) beschichtet. Die Formstandzeit betrug jeweils 3 min.

| Polyolkomponente: | |
|---|---|
| Polyol III | 75 Gew.-Teile |
| Polyol IV | 12 Gew.-Teile |
| Ethylenglykol | 5 Gew.-Teile |
| Bis-(dimethylamino-n-propyl)-amin | 0,5 Gew.-Teile |
| N,N,N',N'-Tetramethylhexamethylendiamin | 0,5 Gew.-Teile |
| Carbamat I | 2,5 Gew.-Teile |
| Schwarzpaste N der Bayer AG | 5,0 Gew.-Teile. |

| Polyisocyanatkomponente: | |
|---|---|
| Polyisocyanat III | 50,0 Gew.-Teile. |

A) Lenkradform
   Rohdichte: 450 kg/m⁻³
   Es konnte nach 3 min ein Formteil mit optimal ausgebildeten Konturen entnommen werden. Farbverteilung und Oberflächenstruktur waren einwandfrei.
B) Plattenform
   Zur Ermittlung der Schwindung wurde zusätzlich in einer Plattenform aus Stahl der Abmessungen 300x236x10 mm³ verarbeitet.
   Formstandzeit: 3 min
   Schwindung unmittelbar nach der Entformung: 0,5 %
   Schwindung nach 2 Tagen: 1,3 %.

### Beispiel 4 Vergleich zu Beispiel 3)

| Polyolkomponente: | |
|---|---|
| Polyol III | 75,0 Gew.-Teile |
| Polyol IV | 12,0 Gew.-Teile |
| Ethylenglykol | 6,0 Gew.-Teile |
| Wasser | 0,8 Gew.-Teile |
| Bis-(dimethylamino-n-propyl)-amin | 1,2 Gew.-Teile |
| Tetramethylhexamethylendiamin | 0,2 Gew.-Teile |
| Schwarzpaste N der Bayer AG | 5,0 Gew.-Teile. |

| Polyisocyanatkomponente: | |
|---|---|
| Polyisocyanat III | 51 Gew.-Teile |

A) Lenkradform
   Es wird ein Formteil erhalten, das stark nachbläht. Hierdurch hat sich auf der Oberfläche des Formteils die Trennkante des Werkzeugs bereits abgebildet.
B) Plattenform
   Unmittelbar nach Entformung hat sich das Formteil bereits um 8 % durch Blähen vergrößert.

## Patentansprüche

1. Verfahren zur FCKW-freien Herstellung von zelligen Polyurethanformkörpern mit kompakter Oberfläche durch Umsetzung in geschlossenen Formen eines Reaktionsgemischs aus
A) einer Polyisocyanatkomponente mit einem NCO-Gehalt von 18 bis 33,6 Gew.-%, bestehend aus mindestens einem, gegebenenfalls chemisch modifizierten Polyisocyanat oder Polyisocyanatgemisch der Diphenylmethanreihe,
B) einer Polyolkomponente einer mittleren Hydroxylfunktionalität von 2 bis 3, bestehend aus mindestens einem Polyetherpolyol des Molekulargewichtsbereichs 2 000-10 000 und/oder mindestens einem Polyesterpolyol des Molekulargewichtsbereichs 2 000-10 000,
C) mindestens einer im Sinne der Isocyanat-Polyadditionsreaktion difunktionellen Verbindung des Molekulargewichtsbereichs 62 bis 1999 in einer Menge von 2 bis 15 Gew.-%, bezogen auf das Gewicht der Komponente B),
in Gegenwart von
D) Treibmitteln und weiteren aus der Polyurethanchemie an sich bekannten Hilfs- und Zusatzmitteln,
dadurch gekennzeichnet, daß man als Treibmittel D) Carbamate der allgemeinen Formel 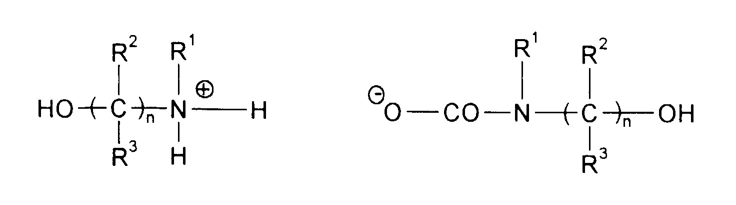 gegebenenfalls zusammen mit anderen halogenfreien Treibmitteln verwendet, wobei
R¹ für Wasserstoff, einen C₁-C₅-Alkylrest oder einen Rest der Formel 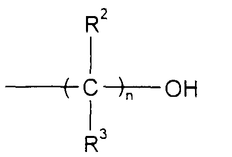 steht,
R² und R³ für gleiche oder verschiedene Reste stehen und Wasserstoff oder C₁-C₃-Alkylreste bedeuten und
n für eine ganze Zahl von 2 bis 6 steht.

2. Verfahren gemäß Anspruch 1, dadurch gekennzeichnet, daß man als Carbamat ein solches der in Anspruch 1 genannten allgemeinen Formel verwendet, für welches
R¹ für Wasserstoff, eine Methylgruppe oder den Rest der Formel 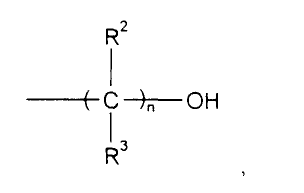
R² für Wasserstoff steht,
R³ für Wasserstoff oder eine Methylgruppe steht,
n für 2 steht oder im Falle von R² = R³ = H, auch für 3 stehen kann.

3. Verfahren gemäß Anspruch 1 und 2, dadurch gekennzeichnet, daß die Carbamate in einer Menge von 0,1 bis 6 Gew.-%, bezogen auf das Gewicht der Komponente B) zum Einsatz gelangen.

4. Verfahren gemäß Anspruch 1 bis 3 zur Herstellung von Schaumstoff-Ummantelungen von Lenkrädern, Spoilern, sowie Schutzpolstern im Autoi nnenraum

5. Verfahren gemäß Anspruch 1 bis 3 zur Herstellung von Schuhsohlen bzw. Schuhbauteilen nach dem Gieß- oder Direktbeschichtungsverfahren.

## Claims

1. Process for the CFC-free preparation of cellular polyurethane mouldings having a compact surface by the reaction in closed moulds of a reaction mixture comprising
A) a polyisocyanate component having an NCO content of from 18 to 33.6 wt.%, consisting of at least one, optionally chemically modified, polyisocyanate or mixture of polyisocyanates of the diphenylmethane series,
B) a polyol component having an average hydroxyl functionality of 2 to 3, consisting of at least one polyether polyol in the molecular weight range of from 2,000 to 10,000 and/or at least one polyester polyol in the molecular weight range of from 2,000 to 10,000,
C) at least one compound which is difunctional in the isocyanate polyaddition reaction and is in the molecular weight range of from 62 to 1,999, in a quantity of from 2 to 15 wt.%, based on the weight of component B),
in the presence of
D) blowing agents and other auxiliary substances and additives known per se from polyurethane chemistry,
characterised in that the compounds used as blowing agent D) are carbamates corresponding to the general formula 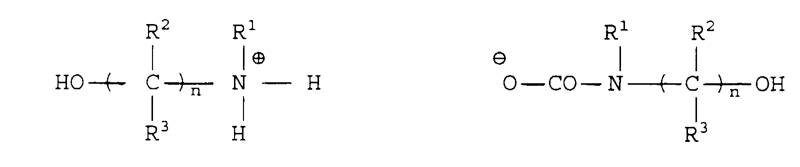 optionally together with other halogen-free blowing agents, wherein
R¹ represents hydrogen, a C₁-C₅ alkyl group or a group corresponding to the formula 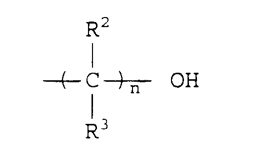
R² and R³ represent identical or different groups and denote hydrogen or C₁-C₃ alkyl groups and
n represents an integer from 2 to 6.

2. Process according to claim 1, characterised in that the carbamate used is one such as corresponds to the general formula given in claim 1, for which
R¹ represents hydrogen, a methyl group or the group corresponding to the formula 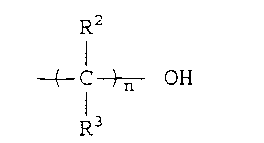
R² represents hydrogen,
R³ represents hydrogen or a methyl group,
n represents 2 or, in the case where R² = R³ = H, may also represent 3.

3. Process according to claims 1 and 2, characterised in that the carbamates are used in a quantity of from 0.1 to 6 wt.%, based on the weight of component B).

4. Process according to claims 1 to 3 for the preparation of foamed plastics casings of steering wheels, spoilers, and protective cushions in the interior of an automobile.

5. Process according to claims 1 to 3 for the preparation of soles of shoes and component parts of shoes by the casting process or direct coating process.

## Revendications

1. Procédé de préparation sans CFC de corps moulés cellulaires en polyuréthane à surface compacte par réaction dans des moules fermés d'un mélange réactionnel consistant en
A) un composant polyisocyanate ayant une teneur en NCO de 18 à 33,6 % en masse, consistant en au moins un polyisocyanate ou mélange de polyisocyanates éventuellement modifié chimiquement de la série du diphénylméthane,
B) un composant polyol ayant une fonctionnalité hydroxyle moyenne de 2 à 3, consistant en au moins un polyétherpolyol de domaine de masse moléculaire de 2 000-10 000 et/ou au moins un polyesterpolyol de domaine de masse moléculaire de 2 000-10 000,
C) au moins un composé difonctionnel au sens de la réaction de polyaddition d'isocyanate, de domaine de masse moléculaire de 62 à 1999 en une quantité de 2 à 15 % en masse par rapport à la masse du composant B)
en présence
D) de porogènes et d'autres adjuvants et additifs connus en soi en chimie des polyuréthanes,
caractérisé en ce que l'on utilise comme porogènes D) des carbamates de formule générale 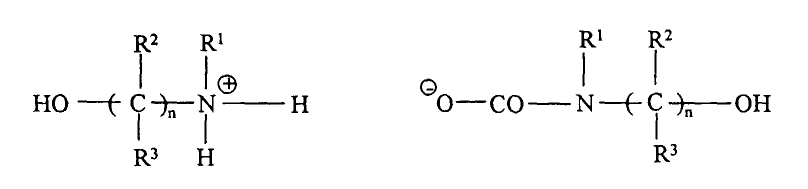 éventuellement en même temps que d'autres porogènes exempts d'halogènes, où
R¹ représente l'hydrogène, un reste alkyle en C₁-C₅ ou un reste de formule 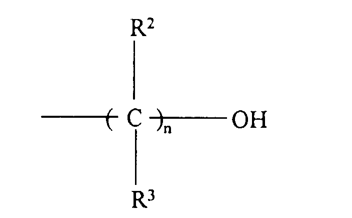
R² et R³ représentent des restes identiques ou différents et représentent l'hydrogène ou des restes alkyle en C₁-C₃ et
n représente un nombre entier de 2 à 6.

2. Procédé selon la revendication 1, caractérisé en ce que l'on utilise comme carbamate un carbamate selon la formule générale citée dans la revendication 1 pour lequel
R¹ représente l'hydrogène, un groupe méthyle ou un reste de formule 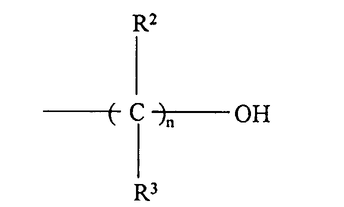
R² représente l'hydrogène,
R³ représente l'hydrogène ou un groupe méthyle,
n représente 2 ou peut aussi représenter 3 dans le cas où R² = R³ = H.

3. Procédé selon les revendications 1 et 2, caractérisé en ce que les carbamates sont utilisés en une quantité de 0,1 à 6 % en masse par rapport à la masse du composant B).

4. Procédé selon les revendications 1 à 3 pour la préparation d'enveloppes de mousse pour volants, déporteurs, et de rembourrages protecteurs dans l'habitacle de véhicules automobiles.

5. Procédé selon les revendications 1 à 3 pour la préparation de semelles de chaussure ou d'éléments de chaussure selon le procédé de coulée ou de revêtement direct.
